# EUROPÄISCHE PATENTSCHRIFT

(11) **EP 4 228 951 B1**
(45) Veröffentlichungstag und Bekanntmachung des Hinweises auf die Patenterteilung: **25.03.2026**
(21) Anmeldenummer: 22727281.2
(22) Anmeldetag: 03.05.2022
(51) Int. Cl.: B62D 21/15, B62D 25/02, B62D 25/20, B60K 1/04

(54) **BODENSTRUKTUR FÜR EINEN PERSONENKRAFTWAGEN UND BAUKASTENSYSTEM FÜR EINE KAROSSERIE EINES KRAFTWAGENS**
FLOOR STRUCTURE FOR A PASSENGER CAR AND MODULAR SYSTEM FOR A BODY OF A MOTOR VEHICLE
STRUCTURE DE PLANCHER POUR UNE VOITURE PARTICULIÈRE ET SYSTÈME MODULAIRE POUR UNE CARROSSERIE DE VOITURE

(30) Priorität: 04.05.2021 DE 102021002367
(43) Veröffentlichungstag der Anmeldung: 23.08.2023
(73) Patentinhaber: Mercedes-Benz Group AG, 70372 Stuttgart (DE)
(72) Erfinder: CARL, Michael, 70839 Gerlingen (DE)
(74) Vertreter: Novagraaf Group
(86) Internationale Anmeldenummer: PCT/EP2022/061756
(87) Internationale Veröffentlichungsnummer: WO 2022/233812

(56) Entgegenhaltungen:
- WO-A1-2019/059821
- WO-A1-2021/071410
- JP-A- 2010 208 473
- JP-A- 2010 274 848
- US-A1- 2011 049 937
- US-A1- 2017 050 675
- US-A1- 2020 262 491

## Beschreibung

Die Erfindung betrifft eine Bodenstruktur für einen Personenkraftwagen gemäß dem Oberbegriff des Anspruchs 1 und ein Baukastensystem für eine Karosserie eines Kraftwagens gemäß Oberbegriff des Anspruchs 11.

Eine derartige Bodenstruktur ist beispielsweise aus der EP 2 468 609 B1 bekannt und umfasst jeweilige, einen jeweiligen Hohlraum aufweisende Seitenschweller, welche seitlich an einen Fahrzeugboden angeschlossen sind und zwischen welchen sich Querträger erstrecken. Um dabei eine unterhalb des Fahrzeugbodens und sich zwischen den Seitenschwellern erstreckende Energiespeichereinrichtung insbesondere vor einem Seitenaufprall zu schützen, sind entlang der jeweils zugeordneten Seitenschweller entsprechende Energieabsorptionselemente angeordnet. Im vorliegenden Fall sind diese Energieabsorptionselemente auf Seiten des Speichergehäuses der Energiespeichereinrichtung angeordnet und beispielsweise als Strangpress- oder Rollprofile ausgebildet. Aus anderen Ausführungen ist es überdies bekannt, derartige Energieabsorptionselemente nicht auf Seiten des Speichergehäuses anzuordnen, sondern vielmehr innerhalb des Hohlraums des jeweiligen Seitenschwellers.

Aus der WO 2021/071410 A1 und der WO 2019/059821 A1 gehen jeweils eine Bodenstruktur mit Seitenschwellern, zwischen den Seitenschwellern auf einer Höhe verlaufenden Querträgern und mit entlang von den Seitenschwellern verlaufenden Energieabsorptionselementen hervor, welche in ihrem Längenverlauf wellenförmig ausgebildet und in Fahrzeughochrichtung in gleichmäßiger Überdeckung mit den Querträgern angeordnet sind. Ähnliche Energieabsorptionselemente gehen auch aus der JP 2010 274848 A hervor.

Allen bekannten Bodenstrukturen ist es jedoch gemeinsam, dass zum notwendigen Schutz der Energiespeichereinrichtung im Falle einer Seitenkollision äußerst große, sich entlang der Fahrzeuglängsachse erstreckende, gewichts- und kostentechnisch aufwändige Energieabsorptionselemente beziehungsweise -profile eingesetzt werden, welche beispielsweise annähernd dem gesamten Querschnitt des Hohlraums des jeweiligen Seitenschwellers einnehmen. Dies ist beispielsweise dem Umstand geschuldet, dass sich das jeweilige Energieabsorptionselement großformatig und über die ganze Erstreckung in Fahrzeughochrichtung der Bodenstruktur an dieser und/oder der Energiespeichereinrichtung abstützen soll.

Aufgabe der vorliegenden Erfindung ist es daher, eine Bodenstruktur der eingangs genannten Art zu schaffen, welche möglichst kosten-, gewichts- und bauraumoptimiert ist. Insbesondere soll das jeweilige Energieabsorptionselement auf besonders günstige Weise auf die Kontur der Bodenstruktur des Kraftwagens abgestimmt sein.

Diese Aufgabe wird erfindungsgemäß durch eine Bodenstruktur mit den Merkmalen des Anspruchs 1 und ein Baukastensystem mit den Merkmalen des Anspruchs 11 gelöst. Vorteilhafte Ausgestaltungen mit günstigen Weiterbildungen der Erfindung sind in den abhängigen Ansprüchen angegeben.

Die erfindungsgemäße Bodenstruktur umfasst pro Fahrzeugseite einen Seitenschweller, durch welche ein jeweiliger Hohlraum begrenzt ist und welche an einem zwischen den Seitenschwellern angeordneten Fahrzeugboden anschließen. Zwischen den Seitenschwellern erstrecken sich vorzugsweise oberhalb eines Bodenblechs oder dergleichen des Fahrzeugbodens jeweilige Querträger zwischen den Seitenschwellern, welche über den Verlauf der Bodenstruktur in Fahrzeuglängsrichtung bezogen auf die Fahrzeughochrichtung in unterschiedlichen Höhenlagen angeordnet sind. Außerdem erstrecken sich entlang der Seitenschweller jeweilige profilartige Energieabsorptionselemente, welche erfindungsgemäß in ihrem Längenverlauf zumindest einen nicht-linearen, insbesondere einen gekrümmten, geknickten oder ähnlichen Längenbereich aufweisen und sich zumindest annährend über die gesamte Länge des Seitenschwellers erstrecken. Durch die bereichsweise nicht-lineare beziehungsweise gekrümmte oder geknickte Ausbildung des jeweiligen Energieabsorptionselements ist es möglich, dieses besonders günstig auf die Ausgestaltung beziehungsweise Kontur der Karosserie-Bodenstruktur abzustimmen und somit die Unfalleigenschaften des Fahrzeugs beziehungsweise die Insassensicherheit im Falle eines Seitenaufpralls erheblich zu verbessern. So ist es beispielsweise und insbesondere möglich, die jeweiligen seitlichen Energieabsorptionselemente auf verbesserte Weise an den jeweiligen Querträgern abzustützen, welche über den Verlauf der Bodenstruktur in Fahrzeuglängsrichtung bezogen auf die Fahrzeughochrichtung in unterschiedlichen Höhenlagen angeordnet sind. Durch den entsprechend nicht-linearen beziehungsweise gekrümmten Verlauf der jeweiligen Energieabsorptionselemente kann somit dennoch erreicht werden, dass diese in optimaler Weise an den in Fahrzeugquerrichtung innenseitig der Energieabsorptionselemente angeordneten Querträgern abgestützt sind, vorzugsweise an allen Querträgern, welche in Fahrzeuglängsrichtung entlang der Energieabsorptionselemente angeordnet und sich zwischen den Seitenschwellern erstrecken. Aufgrund dieser verbesserten Abstützung können sowohl die Bauteile der Bodenstruktur, als auch die Energieabsorptionselemente insgesamt geringer dimensioniert werden, was wiederum zu einer Gewichts- und Bauraumersparnis sowie einer kostengünstigen Fertigung der Bodenstruktur beiträgt.

In weiterer Ausgestaltung der Erfindung hat es sich dabei als vorteilhaft gezeigt, wenn die Energieabsorptionselemente innerhalb des jeweils zugehörigen Hohlraums des entsprechenden Seitenschwellers angeordnet sind. In Kombination mit den jeweiligen Seitenschwellern können somit mittels der Energieabsorptionselemente jeweilige Seitenschwellerstrukturen geschaffen werden, welche bei einem Seitenaufprall einer Barriere beziehungsweise eines Fahrzeugs eine großformatige und günstige Kraftaufnahme gewährleisten.

In weiterer Ausgestaltung der Erfindung ist ein vorderer und/oder hinterer Endbereich der Energieabsorptionselemente als nicht-linearer Längenbereich des Energieabsorptionselements ausgebildet. Dies ermöglicht es beispielsweise, das jeweilige Querträger in einem Mittelbereich des Fahrzeugbodens oberhalb eines Bodenblechs angeordnet sind und in einem vorderen und/oder hinteren Bereich beispielsweise unterhalb des Fahrzeugbodens beziehungsweise des entsprechenden Bodenblechs.

In diesem Zusammenhang hat es sich als weiter vorteilhaft gezeigt, wenn der vordere und/oder hintere Endbereich des Energieabsorptionselements gegenüber einem mittleren Bereich nach unten hin abgesenkt ist. Jedoch wären theoretisch auch nach oben ansteigende Endbereiche der Energieabsorptionselemente denkbar.

Eine weitere vorteilhafte Ausführungsform der Erfindung sieht vor, dass sich die Energieabsorptionselemente im mittleren Bereich zumindest im Wesentlichen auf Höhe jeweiliger, oberhalb des Fahrzeugbodens verlaufender Querträger erstrecken. Im Mittelbereich der Energieabsorptionselemente wird somit die gewünschte, optimale Abstützung und Kraftübertragung der jeweils seitlichen Energieabsorptionselemente zur Fahrzeugmitte hin erreicht.

Eine ebenso günstige Abstützung der jeweiligen Energieabsorptionselemente im vorderen oder hinteren Endbereich wird erreicht, wenn diese auf Höhe eines jeweiligen, unterhalb des Fahrzeugbodens verlaufenden Querträgers verlaufen. Erfahrungsgemäß hat sich gezeigt, dass im vorderen und hinteren Endbereich jeweilige Querträger unterhalb des Fahrzeugbodens beziehungsweise des Bodenblechs angeordnet sind, beispielsweise um eine rahmenartige Aussteifung der Bodenstruktur gemeinsam mit den jeweiligen Seitenschwellern zu erzielen.

In weiterer Ausgestaltung der Erfindung hat es sich als vorteilhaft gezeigt, wenn sich die Energieabsorptionselemente im mittleren Bereich zumindest im Wesentlichen oberhalb einer unterhalb des Fahrzeugbodens und zwischen den Seitenschwellern angeordneten Energiespeichereinrichtung erstrecken. Wird demzufolge die Bodenstruktur für zum Beispiel einen elektrisch betriebenen Kraftwagen mit einer Unterflur-Anordnung eines Energiespeichers eingesetzt, so können durch den entsprechenden Verlauf der Energieabsorptionselemente jeweilige Querträger innerhalb des Energiespeichers vermieden oder minimiert werden, was wiederum eine Einsparung an Bauraum und Fahrzeuggewicht sowie eine kostengünstigere Ausgestaltung des Energiespeichers ermöglicht. Außerdem steigt dadurch des zur Energiespeicherung nutzbare Volumen innerhalb des Gehäuses des Energiespeichers, wodurch zum Beispiel mehr Batteriezellen innerhalb des Energiespeichers, beziehungsweise des Speichergehäuses angeordnet werden, sodass auch hierüber die Fahrzeugreichweite gesteigert werden kann.

Bei einer besonders vorteilhaften Ausführungsform der Erfindung ist vorgesehen, dass sich das jeweilige, einem der beiden Seitenschweller zugeordnete und sich jeweils annähernd entlang der Fahrzeuglängsachse erstreckende Energieabsorptionselement sich nicht ausschließlich geradlinig, wie insbesondere der Seitenschweller erstreckt, sondern mindestens einen Krümmungsbereich um die Fahrzeugquerachse aufweist, wodurch sich in der Seitenansicht des Kraftwagens ein möglichst vollflächiger Abstütz-/ Überdeckungsbereich der Energieabsorptionselemente auf/mit mindestens einer entlang der Fahrzeugquerachse zwischen den beiden Seitenschwellern verlaufenden Querträgerstruktur oberhalb des den Energiespeicher aufnehmenden Bauraums und zusätzlich mindestens ein Abstütz-/ Überdeckungsbereich mit einer Querträgerstruktur vor dem Energiespeicherbauraum oder mindestens ein Abstütz-/ Überdeckungsbereich mit einer Querträgerstruktur hinter dem Energiespeicherbauraum ergibt. Dabei kann in weiterer Ausgestaltung vorgesehen sein, dass sich der Abstütz-/Überdeckungsbereich der Energieabsorptionselemente auf/mit einer Querträgerstruktur vor dem Energiespeicherbauraum oder der Abstütz-/Überdeckungsbereich der Energieabsorptionselemente auf/mit einer Querträgerstruktur hinter dem Energiespeicherbauraum in Fahrzeughochrichtung unterhalb der Abstütz-/ Überdeckungsbereiche der Energieabsorptionselemente auf/mit den Querträgerstrukturen oberhalb des Energiespeicherbauraums befindet.

Schließlich hat es sich als vorteilhaft gezeigt, wenn die Höhe der Seitenschweller zumindest im Wesentlichen der dreifachen Höhe der Energieabsorptionselemente entspricht. Hierdurch ergibt sich eine weitere Optimierung der Bodenstruktur, da die Energieabsorptionselemente trotz ihrer geringen Höhenerstreckung eine optimale Wirkungsweise entfalten.

Weiterhin hat es sich als vorteilhaft gezeigt, wenn die Höhe der Energieabsorptionselemente zumindest im Wesentlichen der Höhe der Querträgerstrukturen oberhalb des Fahrzeugbodens entspricht. Hierdurch ergibt sich eine weitere Optimierung der Bodenstruktur, da die Energieabsorptionselemente trotz ihrer geringen Höhenerstreckung eine optimale Wirkungsweise entfalten können.

Der Gegenstand der Erfindung betrifft auch ein modulares Baukastensystem mit den Merkmalen des Anspruchs 11, welches zur Ertüchtigung der beiden Seitenschweller beziehungsweise der Seitenschwellerstruktur der Kraftwagenkarosserie an den für den Schutz des jeweiligen Energiespeichers notwendigen Positionen dient, insbesondere bei Kraftwagen, die auf einer gemeinsamen Karosserie-Plattform basieren, aber gegenüber dem Grundfahrzeug, das heißt der Karosserie der Grundfahrzeugs, von dem aus durch Modifikationen der Karosserie die Karosserie des mindestens einen anderen Kraftwagens dieser Modellreihe geschaffen wird, eines zum Beispiel erhöhte Anforderungen bezüglich Fahrzeugmasse, Hochvoltsicherheit (zum Beispiel Schutz von elektrischen Komponenten von Elektrofahrzeugen), Insassensicherheit beziehungsweise Maßkonzeptvariationen (zum Beispiel Radstände) zu erfüllen sind, in dem die Energieabsorptionselemente durch Variation der Anzahl und Geometrie der Krümmungsbereiche an die sich ergebenden, verschiedenartigen Lagen der Querträgerstrukturen angepasst werden können, wodurch die Fahrzeugsicherheit im Falle eines Seitenaufpralls mit einem Unfallgegner/Crashbarriere gewichts- und kostenoptimal verbessert wird, indem die Größe und Lage der Abstütz-/Überdeckungsbereiche der Energieabsorptionselemente an den Querträgerträgern/Querträgerstrukturen optimiert und damit eine Intrusion der Karosseriestruktur in den Energiespeicherbauraum während des Aufpralls verhindert werden kann. Die Ausgestaltung der jeweiligen Bodenstruktur der Kraftwagenkarosserien erfolgt vorzugsweise nach einem oder mehreren der Patentansprüche zur Bodenstruktur und/oder aus der Beschreibung der Figuren.

Bei einer vorteilhaften Ausführungsvariante des Baukastensystems ist vorgesehen, dass alle bauvariantenspezifischen Energieabsorptionselemente der jeweiligen Bauvariante der Bodenstruktur des Kraftwagens einen nicht-linearen Längenbereich aufweisen. Sofern eine verbrennungsmotorisch betreibbare Bauvariante vorgesehen ist, können alternativ hierzu deren Seitenschweller gegebenenfalls auch mit Energieabsorptionselementen versehen sein beziehungsweise den Seitenschwellern zugeordnet sein, welche in ihrem Längenverlauf einen linearen Längenverlauf aufweisen, da hier aufgrund eines beispielsweise geringeren Gewichts des Kraftwagens gegenüber einem elektrisch betreibbaren, einen Energiespeicher aufweisenden Kraftwagens nicht so hohe Anforderungen an die Karosserie für beispielsweise einen Seitenanprall bestehen.

Weitere Vorteile, Merkmale und Einzelheiten der Erfindung ergeben sich aus der nachfolgenden Beschreibung bevorzugter Ausführungsbeispiele sowie anhand der Zeichnungen. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Es zeigen:

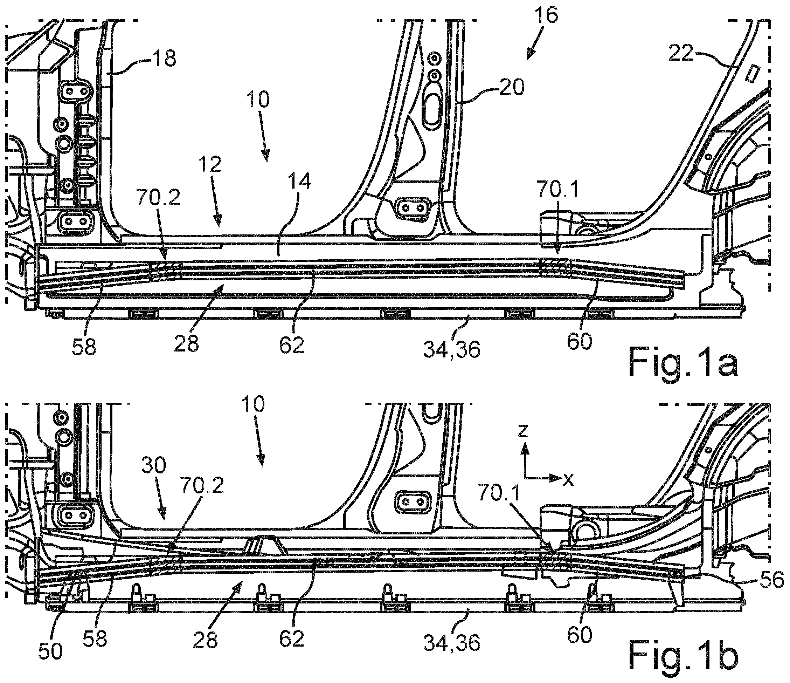

- Fig. 1a, 1b: jeweilige ausschnittsweise Seitenansichten auf eine Karosserie eines vorliegend beispielsweise elektrisch angetriebenen Kraftwagens mit einer erfindungsgemäßen Bodenstruktur und mit einer unterhalb eines Fahrzeugbodens angeordneten Energiespeichereinrichtung, wobei jeweilige Energieabsorptionselemente innerhalb entsprechender Hohlräume der seitliche korrespondierenden Seitenschweller verlaufen und in ihrem Längenverlauf beziehungsweise zwischen vorderen und hinteren Endbereich einen jeweiligen, nicht-linearen beziehungsweise gekrümmten Längenbereich aufweisen, wobei in Fig. 1a eine innere Teilschale des jeweiligen Seitenschwellers gezeigt ist, welche in Fig. 1b der Übersichtlichkeit halber weggelassen ist;

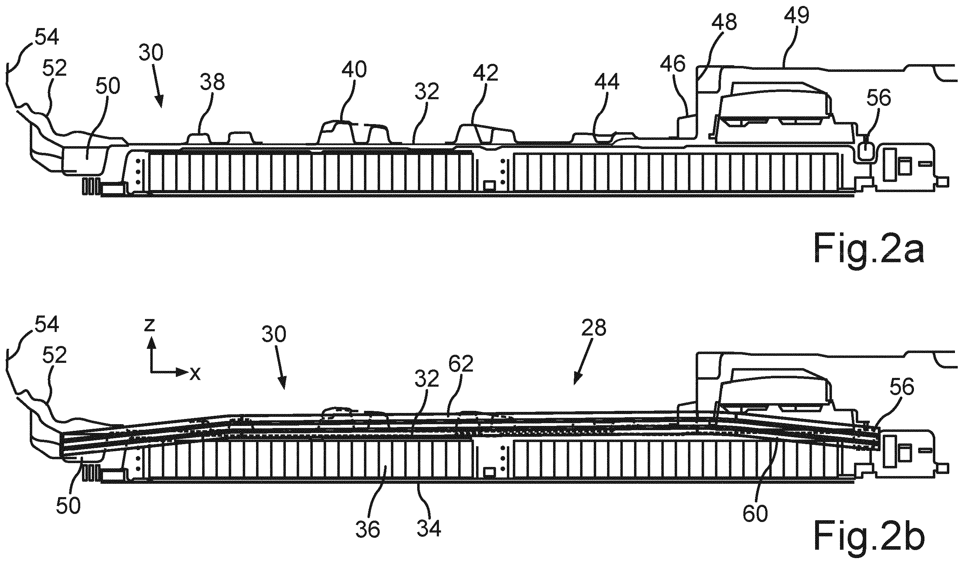

- Fig. 2a, 2b: jeweilige ausschnittsweise Seitenansichten auf die Bodenstruktur gemäß den Fig. 1a und 1b, wobei in Fig. 2a außerdem jeweiligen Querträger der Bodenstruktur erkennbar sind, welche in Fahrzeugquerrichtung zwischen den Seitenschwellern verlaufen und in einem Mittelbereich oberhalb eines Bodenblechs und im vorderen und hinteren Endbereich unterhalb dieses Bodenblechs angeordnet sind und wobei in Fig. 2b außerdem der Verlauf des jeweils entsprechenden, seitlichen Energieabsorptionselements dargestellt ist;

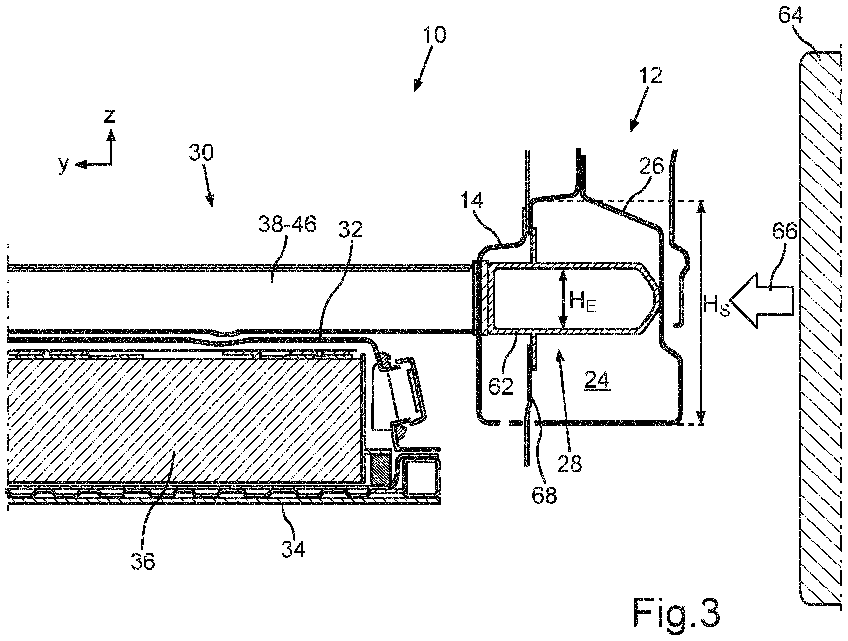

- Fig. 3: eine ausschnittsweise und schematische Schnittansicht entlang einer in Fahrzeugquerrichtung beziehungsweise in Fahrzeughochrichtung verlaufenden Schnittebene durch die Bodenstruktur gemäß den Fig. 1a bis 2b, wobei die Anordnung des entsprechenden Energieabsorptionselements innerhalb des seitlich zugehörigen Seitenschwellers erkennbar ist sowie dessen Abstützung am jeweiligen Querträger zur Fahrzeugmitte hin; und

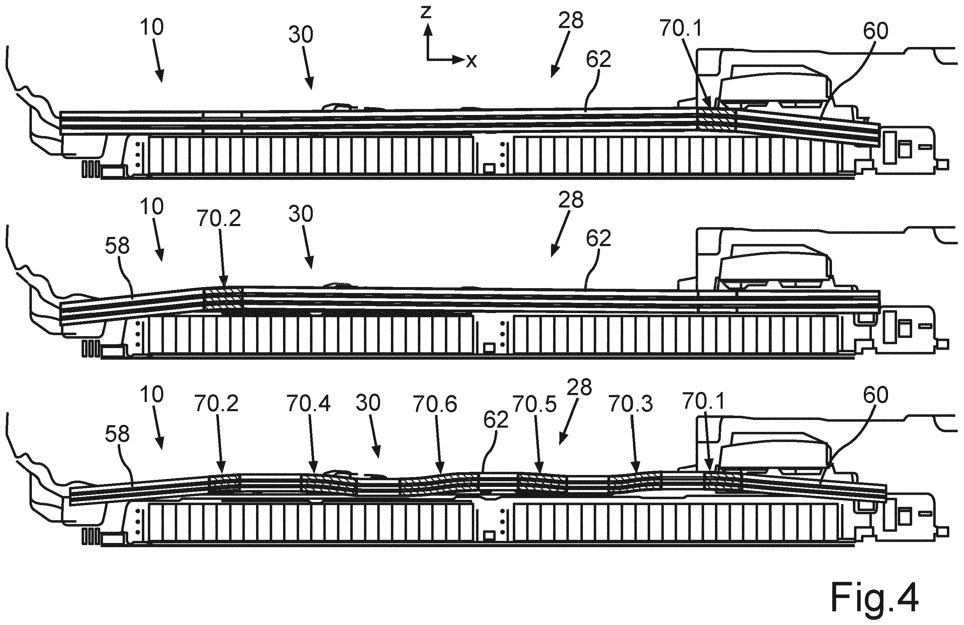

- Fig. 4: jeweilige Seitenansichten der Energiespeichereinrichtung unterhalb des Fahrzeugbodens der Bodenstruktur analog zu den Fig. 2a und 2b, wobei unterschiedliche Gestaltungen des jeweiligen seitlichen Energieabsorptionselements angedeutet sind.

In den Fig. 1a und 1b ist jeweils in einer ausschnittsweisen Seitenansicht eine Karosserie eines bei diesem Ausführungsbeispiel elektrisch angetriebenen Personenkraftwagens dargestellt. Erkennbar ist hierbei eine Bodenstruktur 10 mit einem auf der entsprechenden Fahrzeugseite angeordneten Seitenschweller 12, von welchen vorliegend in Fig. 1a lediglich eine innere Teilschale 14 dargestellt ist. Diese Teilschale 14 gehört zu einer Seitenwand 16 der Karosserie, welche außerdem eine A-Säule 18, eine B-Säule 20 sowie eine C-Säule 22 umfasst.

In Zusammenschau mit Fig. 3, welche in einer ausschnittsweisen Schnittansicht entlang einer in Fahrzeugquerrichtung (y-Richtung) beziehungsweise in Fahrzeughochrichtung (z-Richtung) verlaufenden Schnittebene den entsprechenden Bereich der Bodenstruktur 10 zeigt, wird erkennbar, dass innerhalb eines jeweiligen Hohlraums 24 des seitlich korrespondierenden Seitenschwellers 12, welcher einerseits durch die Teilschale 14 und andererseits durch eine Außenschale 26 gebildet ist, ein Energieabsorptionselement 28 angeordnet ist. Dieses Energieabsorptionselement 28 erstreckt sich - wie dies aus Fig. 1a erkennbar ist - zumindest annährend über die gesamte Länge des Seitenschwellers 16 beziehungsweise eines Fahrzeugbodens 30, von welchem in Zusammenschau der Fig. 1b und Fig. 3 ein Bodenblech 32 erkennbar ist, unterhalb von welchem ein Speichergehäuse 34 einer Energiespeichereinrichtung 36 für den elektrischen Antrieb des Personenkraftwagens angeordnet ist.

Aus den Fig. 2a und 2b, welche jeweils im Wesentlichen lediglich den Fahrzeugboden 30 der Bodenstruktur 10 mit dem unterhalb des Bodenblechs 32 angeordneten Speichergehäuse 34 der Energiespeichereinrichtung 36 zeigen, ist erkennbar, dass in einem Mittelbereich der Bodenstruktur 10 bezogen auf die Fahrzeuglängsrichtung (x-Richtung) eine Mehrzahl von Querträger 38, 40, 42, 44, 46 vorgesehen ist, welche sich allesamt in Fahrzeugquerrichtung (y-Richtung) und horizontal zwischen den an beiden Fahrzeugseite angeordneten Seitenschwellern 16 erstrecken und - wie dies insbesondere aus Fig. 3 erkennbar ist - innenseitig an die Teilschale 14 des Seitenschwellers 12 anschließen.

Im Bereich des hinteren Querträgers 46 geht der Fahrzeugboden 30 an einer Stufe 48 in einen Heckboden 49 über.

Wie des Weiteren insbesondere aus den Fig. 1b und 2a erkennbar ist, ist vorderseitig des Speichergehäuses 34 der Energiespeichereinrichtung 36 ein Querträger 50 angeordnet, der ebenfalls horizontal und in Fahrzeugquerrichtung (y-Richtung) verläuft und unterhalb des Bodenblechs 32 angeordnet ist. Genauer gesagt befindet sich der Querträger 50 unterhalb eines Übergangsbereichs des Bodenblechs 32 zu einem Pedalboden 52 und von dort aus in eine Stirnwand 54, welche die Fahrgastzelle des Kraftwagens von einer Vorbaustruktur unterteilt.

Im hinteren Bereich ist ebenfalls ein Querträger 56 vorgesehen, welcher unterhalb des Heckbodens 49 beziehungsweise unterhalb einer gedachten Verlängerung des Bodenblechs 32 angeordnet ist. In diesem Bereich kann das Speichergehäuse 34 für den Verlauf des Querträgers 56 ausgespart sein.

Wie nun insbesondere aus den Fig. 1a, 1b und 2b erkennbar ist, weist das jeweilige, innerhalb des Hohlraums 24 angeordnete Energieabsorptionselement 28 keinen geradlinigen, linearen Verlauf auf, sondern ist vielmehr vorliegend in seinem Längenverlauf nicht-linear ausgebildet und umfasst bei diesem Ausführungsbeispiel insgesamt-drei Längenbereiche, nämlich einen mittleren Bereich 62, an ein jeweiliger Endbereich 58 beziehungsweise 60 anschließen. Während der mittlere Bereich 62 gerade ausgebildet ist und parallel zur Fahrzeuglängsachse verläuft, verlaufen der vordere und der hintere Endbereich 58, 62 schräg zum geradlinigen mittleren Bereich 62 des Energieabsorptionselements. Die beiden Endbereiche 58, 60 können dabei separat von dem mittleren Bereich 62 oder einstückig mit dem mittleren Bereich 62 ausgebildet und entsprechend umgeformt sein. Hierbei ist es beispielsweise denkbar, das Energieabsorptionselement 28 als ein- oder mehrkammeriges Strangpressprofil auszubilden, wobei an den mittleren Bereich 62 die jeweiligen Endbereiche 58, 60 angesetzt sind, oder aber das Strangpressprofil ist einteilig ausgebildet und im vorderen und hinteren Bereich entsprechend umgeformt worden. Die gegenüber dem mittleren Bereich 62 nicht-linearen Längenbereiche beziehungsweise Endbereiche 58, 60 sind dabei beispielsweise als bogenförmig gekrümmte Teilbereiche oder aber als für sich genommen linear verlaufende Bereiche ausgebildet, welche in einem entsprechenden Winkel zum mittleren Bereich 62 angeordnet und über nicht-lineare Übergangsbereiche 70.1 und 70.2 miteinander verbunden sind. Diese Übergangsbereiche 70.1 und 70.2 sind also die Stellen am Energieabsorptionselement 28, an dem dieses einen nicht-linearen Längenverlauf erhält und die Endbereiche 58, 60 so gegenüber dem mittleren Bereich 62 schräg gestellt werden, dass die Längsmittelachsen der Endbereich 58, 60 nicht mit der Längsmittelachse des geraden mittleren Bereichs 62 fluchten, sondern in einem Winkel größer 0° zu diesem verlaufen.

Als im Rahmen der Erfindung mit umfasst ist es zu betrachten, dass die Energieabsorptionselemente 28 auch aus einem anderen Material als einem zum Strangpressen geeigneten Metallwerkstoff hergestellt sein können. Insbesondere sind auch Kunststoffbauteile oder Hybridbauteile mit Metallwerkstoffen und Kunststoffen oder miteinander gefügte Stahl-Rollprofile denkbar.

Der mittlere Bereich 62 des Energieabsorptionselements 28 auf der jeweiligen Fahrzeugseite erstreckt sich dabei zumindest im Wesentlichen auf Höhe der Querträger 38 bis 46 in Fahrzeughochrichtung (z-Richtung) oberhalb des Bodenblechs 32 und damit einhergehend auch oberhalb des Speichergehäuses 34 der Energiespeichereinrichtung 36. Dies hat zum einen den Vorteil, dass der mittlere Bereich 62 des Energieabsorptionselements 28 eine geringe Höhe H_{E} (Fig. 3b) aufweisen kann, welche im Wesentlichen der Höhe der jeweiligen Querträger 38 bis46 entspricht, und dennoch in optimaler Weise aufgrund der Höhenlage in Fahrzeughochrichtung (z-Richtung) in Überdeckung mit den jeweiligen Querträgern 38 beziehungsweise 46 optimal zur Fahrzeugmitte hin abgestützt ist, wenn eine in Fig. 3 dargestellte Barriere 64 oder ein Fahrzeug oder dergleichen mit einer Kraft 66 bei einem Seitenaufprall auf die Bodenstruktur auftrifft. Durch die Höhenlage des Energieabsorptionselements 28, und insbesondere von dessen mittleren Bereich 62, im Wesentlichen oberhalb der Energiespeichereinrichtung 36 kann zudem auf die Verlegung von Querträgern innerhalb des Speichergehäuses 34 verzichtet werden. Hierdurch ergeben sich ein großes Bauraum- und Gewichtsersparnis einerseits und eine einfache Ausgestaltung des Speichergehäuses 34 andererseits. Gleichwohl ist eine optimale Abstützung des jeweiligen Energieabsorptionselements 28 in Fahrzeugquerrichtung (y-Richtung) gegeben, welches somit einen optimalen Seitenaufprallschutz gewährleisten kann.

Wie insbesondere aus den Fig. 1b und 2b erkennbar ist, ermöglicht der durch die nicht-linearen Übergangsbereiche 70.1 und 70.2 realisierte, gegenüber dem mittleren Bereich 62 geänderte Verlauf der Endbereiche 58, 60, dass die Endbereiche 58 und 60 auch in Überdeckung mit den jeweiligen, im vorderen beziehungsweise im hinteren Bereich der Bodenstruktur 10 verlaufenden Querträger 50 beziehungsweise 56 angeordnet sind. In einem vorderen Bereich der Bodenstruktur 10 ergibt sich somit eine optimale Abstützung des vorderen Endbereichs 58 des Energieabsorptionselements 28 am Querträger 50, welcher unterhalb des Bodenblechs 32 angeordnet ist. Gleichermaßen ergibt sich im hinteren Bereich der Bodenstruktur 10 eine optimale Abstützung des hinteren Endbereichs 60 des Energieabsorptionselements 28, welches auch in diesem Bereich zumindest im Wesentlichen oberhalb der Energiespeichereinrichtung 36 verläuft.

Insbesondere in Zusammenschau mit Fig. 3 ist zudem erkennbar, dass eine Höhe H_{S} des jeweiligen Seitenschwellers 12 im Wesentlichen der dreifachen Höhe des H_{E} des jeweiligen Energieabsorptionselements 28 entspricht. Die Höhe H_{E} des Energieabsorptionselements 28 ist demzufolge weitaus geringer als diejenige Höhe H_{S} des entsprechenden Seitenschwellers 12 innerhalb dessen Hohlraum 24, das im Energieabsorptionselements 28 angeordnet ist. Im vorliegenden Fall erstreckt sich das Energieabsorptionselement 36 über die annährend gesamte Breite des Seitenschwellers 12 und ist lokal mittels eines entsprechenden Blechteils 68, welches im Wesentlichen in Fahrzeughochrichtung (z-Richtung) und in Fahrzeuglängsrichtung (x-Richtung) verläuft, innerhalb des Hohlraums 24 des Seitenschwellers 12 gehalten. Das Blechteil 68 dient also zur Positionierung und Lagefixierung des Energieabsorptionselements 28 innerhalb des Seitenschweller 12.

In Fig. 4 sind analog zu den Fig. 2a und 2b in jeweiligen Seitenansichten weitere Ausgestaltungsformen des entsprechenden seitlichen Energieabsorptionselements 28 pro Fahrzeugseite erkennbar. Insbesondere wird dabei auch anhand der beiden oberen Darstellungen nochmals deutlich, dass insbesondere ein jeweiliger vorderer beziehungsweise hinterer Endbereich 58, 60 vorzugsweise den gegenüber dem mittleren Bereich 62 nicht-linearen Längenverlauf des Energieabsorptionselements 28 bildet (diese Ausführungsform ist nicht dargestellt) oder - wie bei den dargestellten Ausführungsbeispielen gemäß der oberen und mittleren Abbildung der Figur 4 vorgesehen - dass ein jeweiliger vorderer beziehungsweise hinterer linearer Endbereich 58, 60 durch nicht-lineare Übergangsbereiche 70.1 beziehungsweise 70.2 mit dem mittleren Bereich 62 verbunden sind während die Endbereiche 58, 60 für sich gesehen wiederum einen geraden/linearen Längenverlauf aufweisen.

In Fig. 4 zeigt in der unteren Abbildung ein Ausführungsbeispiel des Energieabsorptionselements 28, bei dem dieses im mittleren Bereich 62 mehrfach gekrümmt beziehungsweise mit jeweiligen, nicht-linearen Längenbereichen 70.1 bis 70.6 versehen ist, während die zwischen diesen nicht-linearen Längengereichen 70.1 bis 70.6 verlaufenden Längenbereiche 70 für sich jeweils wieder einen geraden Längenverlauf aufweisen beziehungsweise aufweisen können. Somit kann durch die jeweiligen Längenbereiche beziehungsweise Krümmungsbereiche eine noch optimalere Anpassung des Energieabsorptionselements 28 an die jeweilige Anordnung der Querträger 38 bis 46 in Fahrzeughochrichtung (z-Richtung im Fahrzeugkoordinatensystem) erfolgen.

Insgesamt ist somit erkennbar, dass durch die erfindungsgemäße Bodenstruktur eine möglichst kosten-, gewichts- und bauraumoptimale Schwellerstruktur mit zugehörigen Energieabsorptionselementen 28 geschaffen werden kann, welche abgestimmt auf die Kontur des Fahrzeugbodens 30 beziehungsweise der Bodenstruktur 10 insgesamt den jeweiligen Energiespeicher 36 in optimaler Weise ebenso schützt wie die Insassensicherheit im Falle eines Seitenaufpralls verbessert. Dabei kann die Bodenstruktur beziehungsweise können die zugehörigen Energieabsorptionselemente 28 in optimaler Weise an unterschiedliche Energiespeicher angepasst werden. So ist es nicht nur möglich, die Bodenstruktur 10 auf eine Energiespeichereinrichtung 36 für einen elektrischen Antrieb anzupassen, sondern ist beispielsweise gleichermaßen auch bei einem Kraftstoffbehälter, beispielsweise für Brennstoffzellen, anwendbar.

Insbesondere können bei Fahrzeugen mit erhöhtem Fahrzeuggewicht zusätzliche Querträgerstrukturen innerhalb des Energiespeichers 36 beziehungsweise des Speichergehäuses 34 vermieden werden. Durch die zumindest in einem Längenbereich nicht-lineare beziehungsweise gekrümmte Ausbildung des jeweiligen Energieabsorptionselements 28 kann eine möglichst vollfächige Abstützung und Überdeckung mit der Querträgerstruktur oberhalb des Energiespeichers 36 erreicht werden.

Zudem kann ein modulares Baukastensystem geschaffen werden, welches zur Ertüchtigung der jeweiligen Seitenschwellern 12 und deren Energieabsorptionselemente 28 an den für den Schutz des jeweiligen Energiespeichers 36 notwendigen Positionen genutzt werden kann, und zwar insbesondere bei Fahrzeugen, die auf einer gemeinsamen Karosserieplattform basieren, aber gegenüber dem Grundfahrzeug beispielsweise erhöhte Anforderungen bezüglich der Fahrzeugmasse, der Hochvoltsicherheit (zum Beispiel Schutz von elektrischen Komponenten von Elektrofahrzeugen), der Insassensicherheit beziehungsweise Maßkonzeptvariationen (zum Beispiel Radstände) zu erfüllen sind. Dies erfolgt, indem die Energieabsorptionsstruktur und deren Energieabsorptionselemente 28 durch Variation der Anzahl und Geometrie der nicht-linearen Krümmungsbereiche an die sich ergebenden, verschiedenartigen Lagen der Querträgerstrukturen angepasst werden, wodurch die Fahrzeugsicherheit im Falle eines Seitenaufpralls mit einem Unfallgegner / einer Crashbarriere 64 gewichts- und kostenoptimal verbessert wird. Hierzu wird die Größe und Lage der Abstütz-/Überdeckungsbereiche zwischen der Energieabsorptionsstruktur und deren Energieabsorptionselemente 28 und der Querträgerstruktur optimiert und damit eine Intrusion der Bodenstruktur in den Bauraum des Energiespeichers 36 während des Aufpralls verhindert.

Zusammenfassend bleibt festzuhalten, dass im Zusammenhang mit der hier vorliegenden Erfindung unter einem Energieabsorptionselement mit zumindest einen nicht-linearen Längenbereich über seinen Längenverlauf ein langgestrecktes Profilbauteil zu verstehen ist, das keine gerade Längsmittelachse aufweist, sondern so geformt beziehungsweise umgeformt ist, dass mindestens zwei Längenbereiche gebildet sind, deren Längsmittelachse nicht fluchtend angeordnet sind. Diese stehen im Falle von jeweils für sich gesehen geraden Längenbereichen schräg zueinander und schließen zwischen sich einen Winkel ein beziehungsweise - sofern einer dieser nicht-linearen Längenbereiche gekrümmt ausgebildet ist und dessen Längsmittelachse einen demgemäß entsprechend gekrümmten Verlauf aufweist - der nicht-lineare Längenbereich steht entsprechend seines Verlauf nach oben oder unten vom linearen Längenbereich ab. Wichtig ist, dass das jeweilige Energieabsorptionselement so über seinen Längenverlauf geformt ist, dass das Energieabsorptionselement in Fahrzeugquerrichtung und Fahrzeughochrichtung in Überdeckung, vorzugsweise zumindest Teilüberdeckung, insbesondere Vollüberdeckung, mit im Bodenbereich der Karosserie angeordneten Querträgern angeordnet ist, die ihrerseits auf unterschiedlichen Höhenniveaus bezogen auf eine gedachte Horizontale, beispielsweise eine unter dem Fahrzeug befindliche Fahrbahn, angeordnet sind.

## Patentansprüche

1. Bodenstruktur (10) für einen Personenkraftwagen, mit jeweiligen, wenigstens einen Hohlraum (24) begrenzenden Seitenschwellern (12), welche seitlich an einen Fahrzeugboden (30) angeschlossen sind und zwischen welchen sich mehrere Querträger (38 - 46, 50, 56) erstrecken, und mit jeweiligen Energieabsorptionselementen (28), welche entlang des zugeordneten Seitenschwellers (12) verlaufen, und sich zumindest annährend über die gesamte Länge des Seitenschwellers (12) erstrecken
**dadurch gekennzeichnet, dass**
die Querträger (38 - 46, 50, 56) über den Verlauf der Bodenstruktur in Fahrzeuglängsrichtung bezogen auf die Fahrzeughochrichtung in unterschiedlichen Höhenlagen angeordnet sind, und dass die Energieabsorptionselemente (28) in ihrem Längenverlauf zumindest einen nicht-linearen Längenbereich (58; 60; 70.1 bis 70.6) aufweisen, welcher derart ausgebildet ist, dass das jeweilige Energieabsorptionselement (28) in Fahrzeugquerrichtung und Fahrzeughochrichtung in zumindest Teilüberdeckung mit den Querträgern (38 - 46, 50, 56) angeordnet ist.

2. Bodenstruktur (10) nach Anspruch 1,
**dadurch gekennzeichnet, dass**
die Energieabsorptionselemente (28) innerhalb des Hohlraums (24) des zugehörigen Seitenschwellers (12) angeordnet ist.

3. Bodenstruktur (10) nach Anspruch 1 oder 2,
**dadurch gekennzeichnet, dass**
die Energieabsorptionselemente (28) in ihrem Längenverlauf zwischen deren mittleren Bereich (62) und einen daran zumindest mittelbar anschließenden vorderen und/oder hinteren Endbereich (58, 60) zumindest einen nicht-linearen Übergangsbereich (70.1 bis 70.6) oder einen linearen, aber schräg zur Längsmittelachse des mittleren Bereichs (62) verlaufenden Übergangsbereich (70.1 bis 70.6) aufweisen.

4. Bodenstruktur nach Anspruch 1 oder 2,
**dadurch gekennzeichnet, dass**
ein vorderer und/oder hinterer Endbereich (58, 60) der Energieabsorptionselemente als gegenüber einem mittleren Bereich (62) nicht-linearer Längenbereich ausgebildet ist.

5. Bodenstruktur (10) nach einem der vorhergehenden Ansprüche,
**dadurch gekennzeichnet, dass**
der vordere und/oder hintere Endbereich (58, 60) der Energieabsorptionselemente (28) gegenüber dem mittleren Bereich (62) nach unten hin abgesenkt ist.

6. Bodenstruktur (10) nach einem der vorhergehenden Ansprüche,
**dadurch gekennzeichnet, dass**
sich die Energieabsorptionselemente (28) im mittleren Bereich (62) zumindest im Wesentlichen auf Höhe jeweiliger, oberhalb eines Bodenblechs (32) des Fahrzeugbodens (30) verlaufender Querträger (38 bis 46) erstrecken.

7. Bodenstruktur (10) nach einem der Ansprüche 3 bis 5,
**dadurch gekennzeichnet, dass**
die Energieabsorptionselemente (28) mit ihrem jeweiligen vorderen Endbereich (58) auf Höhe eines unterhalb des Bodenblechs (32) des Fahrzeugbodens (30) verlaufenden Querträgers (50) verlaufen.

8. Bodenstruktur (10) nach einem der Ansprüche 3 bis 6,
**dadurch gekennzeichnet, dass**
die Energieabsorptionselemente (28) mit ihrem jeweiligen hinteren Endbereich (60) auf Höhe eines unterhalb des Fahrzeugbodens (30) verlaufenden Querträgers (56) verlaufen.

9. Bodenstruktur (10) nach einem der vorhergehenden Ansprüche,
**dadurch gekennzeichnet, dass**
die Energieabsorptionselemente (28) im mittleren Bereich (62) zumindest im Wesentlichen oberhalb einer unterhalb des Fahrzeugbodens (30) und zwischen den Seitenschwellern (12) angeordneten Energiespeichereinrichtung (34) verlaufen.

10. Bodenstruktur (10) nach einem der vorhergehenden Ansprüche,
**dadurch gekennzeichnet, dass**
die Höhe (H_{S}) der Seitenschweller (12) zumindest im Wesentlichen der dreifachen Höhe (H_{E}) der Energieabsorptionselemente (28) entspricht.

11. Baukastensystem für eine Karosserie eines Kraftwagens, welcher zumindest eine elektrisch betreibbare Bauvariante und eine verbrennungsmotorisch betreibbare Bauvariante und/oder mindestens zwei elektrisch betreibbare Bauvarianten mit jeweils unterschiedlichen Energiespeichern umfasst, mit jeweiligen bauvariantenübergreifenden Seitenschwellern einer Bodenstruktur nach einem der Ansprüche 1 bis 10, welche zumindest in einem jeweiligen Längenbereich ein Hohlprofil aufweisen,
**dadurch gekennzeichnet, dass**
entlang des zugeordneten Seitenschwellers ein zugeordnetes bauvariantenspezifisches Energieabsorptionselement vorgesehen ist, welche zumindest bei der elektrisch betreibbaren Bauvariante des Kraftwagens in ihrem Längenverlauf zumindest einen nicht-linearen Längenbereich (58; 60; 70.1 bis 70.6) aufweisen, und dass auch bei der mindestens einen weiteren Bauvariante des Kraftwagens den Seitenschwellern ein bauvariantenspezifisches Energieabsorptionselement zugeordnet ist, welches ebenfalls einen nicht-linearen Längenbereich (58; 60; 70.1 bis 70.6) aufweisen kann.

## Claims

1. Floor structure (10) for a passenger car, comprising respective side skirts (12) which delimit at least one cavity (24), are laterally connected to a vehicle floor (30) and between which a plurality of cross members (38 - 46, 50, 56) extend, and comprising respective energy absorption elements (28) which extend along the associated side skirt (12) and extend at least approximately over the entire length of the side skirt (12)
**characterized in that**
the cross members (38 - 46, 50, 56) are arranged, along the extent of the floor structure in the longitudinal direction of the vehicle, at different heights relative to the vertical direction of the vehicle, and **in that** the energy absorption elements (28) have at least one non-linear longitudinal region (58; 60; 70.1 to 70.6) in their longitudinal extent, which is designed such that the relevant energy absorption element (28) is arranged in at least partial overlap with the cross members (38 - 46, 50, 56) in the transverse direction of the vehicle and vertical direction of the vehicle.

2. Floor structure (10) according to claim 1,
**characterized in that**
the energy absorption elements (28) are arranged within the cavity (24) of the associated side skirt (12).

3. Floor structure (10) according to claim 1 or claim 2,
**characterized in that**
the energy absorption elements (28), in their longitudinal extent between their central region (62) and a front and/or rear end region (58, 60) that is at least indirectly connected to the central region, have at least a non-linear transition region (70.1 to 70.6) or a linear transition region (70.1 to 70.6) that extends obliquely to the longitudinal center axis of the central region (62).

4. Floor structure according to claim 1 or claim 2,
**characterized in that**
a front and/or rear end region (58, 60) of the energy absorption elements is designed as a non-linear longitudinal region relative to a central region (62).

5. Floor structure (10) according to any of the preceding claims,
**characterized in that**
the front and/or rear end region (58, 60) of the energy absorption elements (28) is lowered relative to the central region (62).

6. Floor structure (10) according to any of the preceding claims,
**characterized in that**
the energy absorption elements (28) in the central region (62) extend at least substantially at the level of respective cross members (38 to 46) extending above a floor plate (32) of the vehicle floor (30).

7. Floor structure (10) according to any of claims 3 to 5,
**characterized in that**
the energy absorption elements (28), together with their relevant front end region (58), extend at the level of a cross member (50) extending below the floor plate (32) of the vehicle floor (30).

8. Floor structure (10) according to any of claims 3 to 6,
**characterized in that**
the energy absorption elements (28), together with their relevant rear end region (60), extend at the level of a cross member (56) extending below the vehicle floor (30).

9. Floor structure (10) according to any of the preceding claims,
**characterized in that**
the energy absorption elements (28) in the central region (62) extend at least substantially above an energy storage device (34) arranged below the vehicle floor (30) and between the side skirts (12).

10. Floor structure (10) according to any of the preceding claims,
**characterized in that**
the height (H_{S}) of the side skirts (12) corresponds at least substantially to three times the height (H_{E}) of the energy absorption elements (28).

11. Modular system for a body of a motor vehicle comprising at least an electrically operable variant and an internal combustion engine-operable variant and/or at least two electrically operable variants which each have different energy stores, the system comprising respective cross-variant side skirts of a floor structure according to any of claims 1 to 10, which have a hollow profile at least in a relevant longitudinal region,
**characterized in that**
an associated variant-specific energy absorption element is provided along the associated side skirt, which element, at least in the case of the electrically operable variant of the motor vehicle, has at least one non-linear longitudinal region (58; 60; 70.1 to 70.6) in its longitudinal extent, and **in that** in at least one further variant of the motor vehicle, a variant-specific energy absorption element is associated with the side skirts, which element can also have a non-linear longitudinal region (58; 60; 70.1 to 70.6).

## Revendications

1. Structure formant plancher (10) pour une voiture de tourisme, comportant des bas de caisse (12) respectifs délimitant au moins un espace creux (24), lesquels sont reliés latéralement à un plancher de véhicule (30) et entre lesquels s'étendent plusieurs barres transversales (38 - 46, 50, 56), et comportant des éléments d'absorption d'énergie (28) respectifs, lesquels s'étendent le long du bas de caisse (12) associé et s'étendent au moins approximativement sur toute la longueur du bas de caisse (12)
**caractérisée en ce que**
les barres transversales (38 - 46, 50, 56) sont disposées à des hauteurs différentes sur l'extension de la structure formant plancher dans la direction longitudinale de véhicule par rapport à la direction de hauteur de véhicule, **et en ce que** les éléments d'absorption d'énergie (28) présentent, dans leur extension longitudinale, au moins une zone longitudinale non linéaire (58 ; 60 ; 70.1 à 70.6) qui est conçue de telle sorte que l'élément d'absorption d'énergie (28) respectif est disposé dans la direction transversale de véhicule et dans la direction de hauteur de véhicule en recouvrement au moins partiel avec les barres transversales (38 - 46, 50, 56).

2. Structure formant plancher (10) selon la revendication 1,
**caractérisée en ce que**
les éléments d'absorption d'énergie (28) sont disposés à l'intérieur de l'espace creux (24) du bas de caisse (12) associé.

3. Structure formant plancher (10) selon la revendication 1 ou 2,
**caractérisée en ce que**
les éléments d'absorption d'énergie (28) présentent, dans leur extension longitudinale entre leur zone centrale (62) et une zone d'extrémité avant et/ou arrière (58, 60) qui y est reliée au moins indirectement, au moins une zone de transition non linéaire (70.1 à 70.6) ou une zone de transition linéaire (70.1 à 70.6), mais s'étendant en oblique par rapport à l'axe central longitudinal de la zone centrale (62).

4. Structure formant plancher selon la revendication 1 ou 2,
**caractérisée en ce que**
une zone d'extrémité avant et/ou arrière (58, 60) des éléments d'absorption d'énergie est réalisée sous forme de zone longitudinale non linéaire par rapport à une zone centrale (62).

5. Structure formant plancher (10) selon l'une des revendications précédentes,
**caractérisée en ce que**
la zone d'extrémité avant et/ou arrière (58, 60) des éléments d'absorption d'énergie (28) est abaissée vers le bas par rapport à la zone centrale (62).

6. Structure formant plancher (10) selon l'une des revendications précédentes,
**caractérisée en ce que**
les éléments d'absorption d'énergie (28) s'étendent dans la zone centrale (62) au moins sensiblement à hauteur de barres transversales (38 à 46) respectives s'étendant au-dessus d'une tôle de plancher (32) du plancher de véhicule (30).

7. Structure formant plancher (10) selon l'une des revendications 3 à 5,
**caractérisée en ce que**
les éléments d'absorption d'énergie (28) s'étendent avec leur zone d'extrémité avant (58) respective à hauteur d'une barre transversale (50) s'étendant en dessous de la tôle de plancher (32) du plancher de véhicule (30).

8. Structure formant plancher (10) selon l'une des revendications 3 à 6,
**caractérisée en ce que**
les éléments d'absorption d'énergie (28) s'étendent avec leur zone d'extrémité arrière (60) respective à hauteur d'une barre transversale (56) s'étendant en dessous du plancher de véhicule (30).

9. Structure formant plancher (10) selon l'une des revendications précédentes,
**caractérisée en ce que**
les éléments d'absorption d'énergie (28) s'étendent dans la zone centrale (62) au moins sensiblement au-dessus d'un dispositif d'accumulation d'énergie (34) disposé en dessous du plancher de véhicule (30) et entre les bas de caisse (12).

10. Structure formant plancher (10) selon l'une des revendications précédentes,
**caractérisée en ce que**
la hauteur (H_{S}) des bas de caisse (12) correspond au moins sensiblement à trois fois la hauteur (H_{E}) des éléments d'absorption d'énergie (28).

11. Système modulaire pour une carrosserie d'un véhicule automobile, lequel comprend au moins une variante de construction à fonctionnement électrique et une variante de construction à fonctionnement avec un moteur à combustion interne et/ou au moins deux variantes de construction à fonctionnement électrique comportant des accumulateurs d'énergie respectivement différents, comportant des bas de caisse respectifs, recouvrant les variantes de construction, d'une structure formant plancher selon l'une des revendications 1 à 10, lesquels présentent un profilé creux au moins dans une zone longitudinale respective,
**caractérisé en ce que**
le long du bas de caisse associé, un élément d'absorption d'énergie associé, spécifique aux variantes de construction, qui, au moins dans la variante de construction à fonctionnement électrique du véhicule automobile, présente dans son extension longitudinale au moins une zone longitudinale non linéaire (58 ; 60 ; 70.1 à 70.6), **et en ce que,** également dans l'au moins une autre variante de construction du véhicule automobile, un élément d'absorption d'énergie spécifique aux variantes de construction est associé aux bas de caisse, lequel peut également présenter une zone longitudinale non linéaire (58 ; 60 ; 70.1 à 70.6).
